# DEMANDE DE BREVET EUROPEEN

(11) **EP 1 416 432 A1**
(43) Date de publication de la demande: **06.05.2004**
(21) Numéro de dépôt: 03290111.8
(22) Date de dépôt: 16.01.2003
(51) Int. Cl.: G06K 19/02, B42D 15/10

(54) **Carte à puce**

(30) Priorité: 11.10.2002 EP 02292504
(71) Demandeur: SCHLUMBERGER Systèmes, 92120 Montrouge (FR)
(72) Inventeur: Provost, Stéphane, c/o Schlumberger Systèmes, 92542 Montrouge cedex (FR); Chabut, Françoise, c/o Schlumberger Systèmes, 92542 Montrouge cedex (FR); Janot, Aurélie, c/o Schlumberger Systèmes, 92542 Montrouge cedex (FR)

(57) **Abrégé**

L'invention concerne un objet portable comprenant une couche transparente ou translucide, la couche transparente ou translucide ayant une épaisseur inférieure à environ 150 µm, l'objet portable étant caractérisé en ce qu'il comprend en outre une couche opaque, la couche opaque occultant au moins en partie la couche transparente ou translucide.

## Description

La présente invention concerne des cartes comprenant un inlet. Un inlet comprend une couche support et une partie « antenne + module/puce » qui sera appelée par la suite « partie sans contact » de l'inlet. L'invention concerne en particulier des cartes sans contact, des cartes hybrides, des cartes combi ou des cartes transparentes devant être, par exemple, imprimées au moins localement.

Une carte sans contact comprend un inlet comprenant deux faces. L'inlet est prélaminé ou non. Des couches extérieures sont fixées de part et d'autre de l'inlet. Ces couches extérieures peuvent être imprimées ou non.

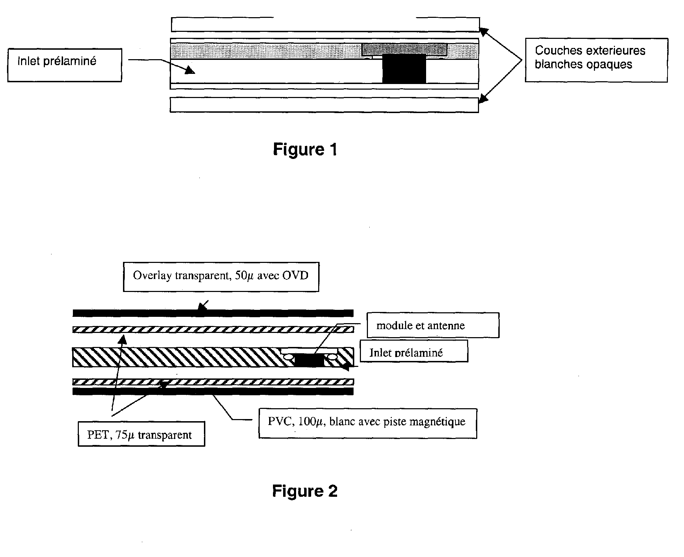

Comme l'illustre la figure 1, les couches extérieures sont parfois en PET blanc. Dans ce dernier cas, la partie sans contact est donc invisible. Le PET blanc se trouve généralement sous forme de couche ayant une épaisseur supérieure à environ 150µm et en tout cas supérieur à 100µm.

D'autres cartes comprennent des couches extérieures en PET transparent ayant par exemple une épaisseur de 75µm. Les PET transparents ont une structure amorphe. Du fait notamment de cette structure amorphe, le PET transparent présente généralement une meilleure résistance mécanique qu'un PET blanc. Une carte comprenant deux couches en PET transparent de 75µm d'épaisseur présente en effet une résistance mécanique supérieure à environ 20 000 flexions en flèche de 11mm. Un autre avantage du PET transparent est qu'on le trouve sous forme de couche ayant une épaisseur plus faible que dans le cas du PET blanc. Le PET transparent ayant une épaisseur d'environ 75µm existe tandis qu'un PET blanc de 75µm n'est pas actuellement disponible sur le marché. L'utilisation du PET transparent 75µm permet de construire des corps de cartes ayant plus de couches tout en obtenant une carte dont l'épaisseur totale demeure conforme aux normes de fabrication. Néanmoins la partie sans contact demeure visible.

Un objet de l'invention est un objet portable comprenant une couche transparente ou translucide, la couche transparente ou translucide ayant une épaisseur inférieure à environ 150 µm, l'objet portable étant caractérisé en ce qu'il comprend en outre une couche opaque, la couche opaque occultant au moins en partie la couche transparente ou translucide.

L'objet portable est, par exemple, une carte comprenant un inlet sur lequel est déposé une couche transparente. L'inlet comprend une partie sans contact. La couche transparente est, par exemple, un PET amorphe. Grâce à la présence du PET amorphe, la carte présente de bonnes caractéristiques mécaniques, notamment une bonne résistance en flexion, tout en conservant une épaisseur réduite. En outre la partie sans contact est invisible grâce à la présence de la couche opaque, ce qui est plus esthétique.

L'invention sera mieux comprise à la lumière de l'exemple détaillé suivant. Cet exemple, qui reprend la fabrication d'une carte sans contact, illustre mais ne limite pas la portée de l'invention.

La figure 2 illustre un exemple de structure d'une carte sans contact. Une telle carte comprend un inlet prélaminé. L'inlet prélaminé comprend une antenne et un module. Sur chaque face de l'inlet prélaminé, est fixée une couche de PET transparent ayant une épaisseur d'environ 75µm. Une des couches en PET transparent est recouverte d'un film plastique transparent de 50µm d'épaisseur appelée overlay. Cet overlay peut comprendre des éléments sécuritaires optiques (OVD) par exemple des hologrammes. L'autre couche en PET transparent est recouverte par une couche en chlorure de polyvinyle (PVC) blanc ayant, par exemple, une épaisseur de 100µm. Cette couche peut comprendre une piste magnétique.

L'inlet utilisé est avantageusement prélaminé. Les défauts topographiques de la carte engendrés par la partie sans contact sont ainsi mieux compensés. Ceci permet d'obtenir une carte présentant une surface plus plane. De telles cartes pourront donc recevoir une personnalisation graphique de meilleure qualité. Par exemple, des procédés de thermo-impression pourront être utilisés pour la personnalisation graphique.
L'utilisation d'un PET transparent de 75µm permet, de part sa faible épaisseur, d'optimiser l'épaisseur totale de la carte et d'offrir notamment la possibilité de rajouter des couches supplémentaires si nécessaire. Notons que le PET blanc 75µm n'est pas actuellement disponible sur le marché.

Le fait d'utiliser un PET transparent de 75µm permet en outre d'avoir des caractéristiques mécaniques plus élevées que s'il s'agissait d'un PET blanc de, par exemple, 150µm d'épaisseur. Le PET transparent 75µm présente en effet une résistance mécanique supérieure à 20 000 flexions en flèche de 11mm.

La partie sans contact demeure néanmoins visible, ce qui peut être gênant sur un plan esthétique.

Afin de conserver une carte présentant des caractéristiques mécaniques élevées tout en ayant la partie sans contact invisible, une encre blanche est déposée sur le PET transparent 75µm. L'encre peut être déposée par tout moyen d'impression existant, par exemple, par sérigraphie, offset ou tempographie. L'encre peut-être déposée sur toute la surface de la carte ou seulement une région bien spécifique de celle ci.

L'encre peut-être utilisée avec un diluant afin d'en favoriser la dépose. Avantageusement, de la colle peut être aussi mélangée avec l'encre. Ceci permet de faciliter la dépose et l'adhésion du PET transparent avec d'autres couches formant le corps de carte. Ceci permet également d'éviter de rajouter une couche de colle spécifique.

Avantageusement, des éléments graphiques peuvent être à leur tour être imprimés sur la couche d'encre. La couche d'encre est avantageusement blanche afin d'avoir un meilleur contraste. Les éléments graphiques peuvent être imprimés sur la couche d'encre, par exemple, par sérigraphie ou offset.

Dans le cas d'une carte qui était transparente à l'origine, la déposition d'une couche d'encre, de préférence blanche, permet d'éviter que d'éventuels graphismes se trouvant sur les faces extérieures se chevauchent.

Dans le mode de réalisation décrit ci-dessus la couche d'encre est déposée directement sur le PET transparent de 75µm. Il est bien clair qu'elle peut être déposée sur une autre couche du corps de carte, l'essentiel étant que la partie sans contact de la carte soit cachée.

La description ci-dessus illustre les caractéristiques suivantes :

Un objet portable comprenant une couche transparente ou translucide, la couche transparente ou translucide ayant une épaisseur inférieure à environ 150 µm, l'objet portable étant caractérisé en ce qu'il comprend en outre une couche opaque, la couche opaque occultant au moins en partie la couche transparente ou translucide.

L'objet portable peut-être par exemple une carte à puce ou une carte d'identification ou plus généralement tout objet portable comprenant un élément inesthétique comme par exemple la partie sans contact d'un inlet. L'objet portable peut être également une carte transparente ou translucide.

Dans la description ci-dessus la couche opaque était une couche d'encre, de préférence, blanche. Toute autre couleur peut-être choisie. La couche d'encre peut être déposée par tout moyen d'impression existant, par exemple, par sérigraphie, offset ou tempographie. Mais la couche opaque n'est pas limitée à une couche d'encre. La couche opaque peut être, par exemple, constituée de tout matériau que l'on peut déposer par couche mince. Il peut s'agir notamment d'un métal. La couche opaque peut être constituée également de tout matériau que l'on peut déposer par vaporisation ou toute autre technique de déposition ou d'enduction. La couche opaque peut être également une colle comprenant des pigments colorés, de préférence blanc. La colle peut-être un polyuréthane, une colle cyanoacrylate ou une colle réactivable à chaud.

La couche opaque peut recouvrir entièrement ou partiellement la surface de l'objet portable.

Dans la description ci-dessus la couche transparente est en PET amorphe ayant une épaisseur de 75µm. Plus généralement, il peut s'agir d'un PET amorphe ayant une épaisseur inférieure à environ 150µm, et de préférence inférieure à 100µm. Tout autre matériau transparent ayant une épaisseur inférieure à environ 150µm et de préférence inférieure à 100µm et présentant de bonnes propriétés mécaniques, peut-être utilisé. Il peut s'agir, par exemple, d'un acrylonitrile butadiène-styrène (ABS), d'un chlorure de polyvinyle (PVC) ou d'un polycarbonate (PC). Ces trois derniers matériaux présentent en effet des propriétés mécaniques en flexion parfois inférieures à celle du PET amorphe, mais elles peuvent suffire dans certaines applications. On peut les utiliser par exemple pour fabriquer des cartes moins onéreuses. Tout matériau translucide ayant une épaisseur inférieure à environ 150µm et de préférence inférieure à 100µm et présentant de bonnes propriétés mécaniques, peut-être aussi utilisé. Il peut s'agir par exemple, de polyéthylène (PE), de polyester (PBT) ,de polyamide (PA6, PA66, PA11, PA12), de polypropylène (PP) ou encore d'un polyoxyméthylène (POM).

## Revendications

1. Objet portable comprenant une couche transparente ou translucide, la couche transparente ou translucide ayant une épaisseur inférieure à environ 150 µm, l'objet portable étant **caractérisé en ce qu'**il comprend en outre une couche opaque, la couche opaque occultant au moins en partie la couche transparente ou translucide.

2. Objet portable selon la revendication 1, **caractérisé en ce que** la couche opaque est une couche d'encre.

3. Objet portable selon la revendication 1, **caractérisé en ce que** la couche opaque est une couche d'encre blanche.

4. Objet portable selon la revendication 1, **caractérisée en ce que** la couche opaque comprend en outre un matériau adhésif.

5. Objet portable selon la revendication 1, **caractérisée en ce que** le couche transparente est en PET amorphe.

6. Objet portable selon la revendication 1, **caractérisé en ce que** la couche opaque est située directement sur la couche transparente.

7. Objet portable selon la revendication 1, **caractérisé en ce que** la couche transparente est située sur une couche support comprenant un élément inesthétique.

8. Objet portable selon la revendication 7, **caractérisé en ce que** l'élément inesthétique est une antenne et/ou un module.

9. Objet portable selon la revendication 1, **caractérisé en ce que** la couche opaque est déposée par couche mince.

10. Objet portable selon la revendication 1, **caractérisée en ce que** le couche opaque est une colle comprenant des pigments colorés.
